(19) Europäisches Patentamt
European Patent Office
Office européen des brevets

(11) Veröffentlichungsnummer: **0 280 884 A1**

(12) # EUROPÄISCHE PATENTANMELDUNG

(21) Anmeldenummer: **88101376.7**

(51) Int. Cl.⁴: **A01N 43/653**

(22) Anmeldetag: **01.02.88**

(30) Priorität: **12.02.87 DE 3704262**

(43) Veröffentlichungstag der Anmeldung:
**07.09.88 Patentblatt 88/36**

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Dutzmann, Stefan, Dr.**
**Leinenweberweg 33**
**D-4000 Düsseldorf 13(DE)**
Erfinder: **Reinecke, Paul, Dr.**
**Steinstrasse 8**
**D-5090 Leverkusen 3(DE)**
Erfinder: **Böckman, Klaus, Dr.**
**Andreas-Gryphius-Strasse 7**
**D-5000 Köln 80(DE)**

(54) **Verwendung von Azolylmethyl-cyclopropylcarbinol-Derivaten zur Bekämpfung von Pseudocercosporella herpotrichoides.**

(57) Azolylmethyl-cyclopropyl-carbinol-Derivate der Formel

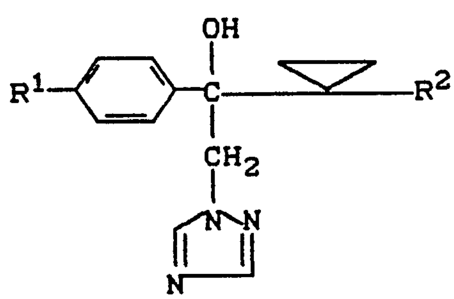

(I)

in welcher
$R^1$ für Fluor oder Chlor steht und
$R^2$ für Fluor oder Chlor steht,
eignen sich sehr gut zur Bekämpfung von Pseudocercosporella herpotrichoides.

EP 0 280 884 A1

## Verwendung von Azolylmethyl-cyclopropylcarbinol-Derivaten zur Bekämpfung von Pseudocercosporella herpotrichoides

Die Erfindung betrifft die Verwendung von bestimmten bekannten Azolylmethyl-cyclopropyl-carbinol-Derivaten zur Bekämpfung von Pseudocercosporella herpotrichoides.

Es ist bereits bekannt geworden, daß bestimmte Azolylmethyl-cyclopropyl-carbinol-Derivate eine gute fungizide Wirksmkeit besitzen (vgl. EP-OS 0 180 136). Eine spezielle Verwendung dieser Stoffe gegen Pseudocercosporella herpotrichoides ist jedoch noch nicht beschrieben worden.

Weiterhin ist bereits bekannt, daß N-[2-(2,4,6-Trichlorphenoxy)-ethyl]-N-propyl-1H-imidazol-1-carboxamid zur Bekämpfung von Pseudocercosporella herpotrichoides geeignet ist (vgl. US-PS 3 991 071 und US-PS 4 080 462). Bei niedrigen Aufwandmengen ist die Wirksamkeit dieses Stoffes aber nicht immer befriedigend.

Es wurde nun gefunden, daß sich Azolylmethyl-cyclopropyl-carbinol-Derivate der Formel

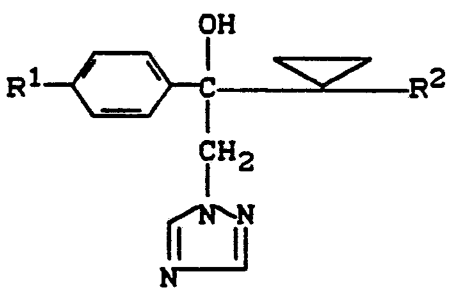

(I)

in welcher

$R^1$ für Fluor oder Chlor steht und

$R^2$ für Fluor oder Chlor steht,

sehr gut zur Bekämpfung von Pseudocercosporella herpotrichoides verwenden lassen.

Überraschenderweise zeigen Azolylmethyl-cyclopropyl-carbinol-Derivate der Formel (I) beim Einsatz gegen Pseudocercosporella herpotrichoides eine wesentlich bessere Wirksamkeit als das N-[2-(2,4,6-Trichlorphenoxy)-ethyl]-N-propyl-1H-imidazol-1-carboxamid, welches ein anerkannt gut wirksamer und chemisch ähnlicher Wirkstoff gleicher Wirkungsrichtung ist.

Die erfindungsgemäß verwendbaren Azolylmethyl-cyclopropyl-carbinol-Derivate sind durch die Formel (I) definiert. Speziell erwähnt seien die Verbindungen der folgenden Formeln:

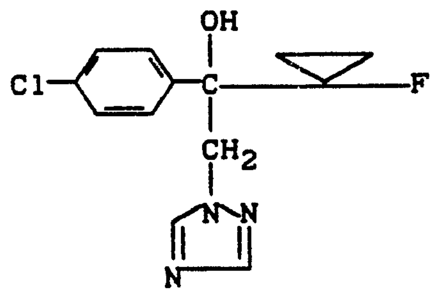

(I-1)

und

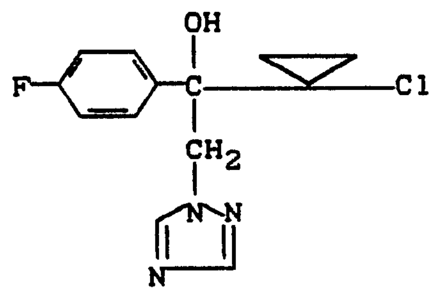

(I-2)

Die Stoffe der Formel (I) sind bekannt (vgl. EP-OS 0 180 136). Sie lassen sich hertellen, indem man

a) in einer ersten Stufe Cyclopropyl-ketone der Formel

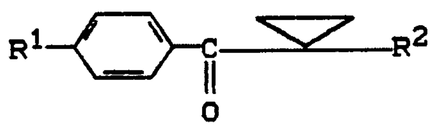

(II)

in welcher
$R^1$ und $R^2$ die oben angegebene Bedeutung haben,
mit Dimethyloxosulfonium-methylid der Formel

$$(CH_3)_2\overset{\oplus}{S}O\overset{\ominus}{C}H_2 \qquad (III)$$

oder mit Dimethylsulfonium-methylid der Formel

$$(CH_3)_2\overset{\delta\oplus}{S}\;\overset{\delta\ominus}{CH_2} \qquad (IV)$$

in Gegenwart eines Verdünnungsmittels, wie z.B. Dimethylsulfoxid, bei Temperaturen zwischen 10 und 60°C umsetzt und

b) die dabei entstehenden Oxirane der Formel

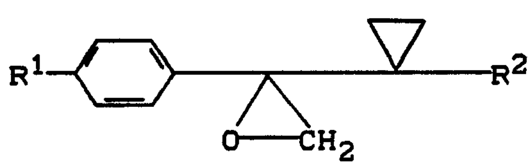

(V)

in welcher
$R^1$ und $R^2$ die oben angegebene Bedeutung haben,
in einer zweiten Stufe mit 1,2,4-Triazol der Formel

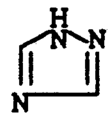

(VI)

in Gegenwart eines Verdünnungsmittels, wie z.B. Dimethylformamid oder Acetonitril, sowie in Gegenwart eines Säurebindemittels, wie z.B. Kaliumcarbonat oder Kalium-tert.-butylat, bei Temperaturen zwischen 60 und 150°C umsetzt.

Die erfindungsgemäß verwendbaren Stoffe eignen sich hervorragend zur Bekämpfung von Pseudocercosporella herpotrichoides, den Erreger der Halmbruchkrankheit bei Getreide. Bevorzugt ist der Einsatz der erfindungsgemäß verwendbaren Stoffe bei der Bekämpfung von Pseudocercosporella herpotrichoides bei Weizen und Gerste.

Die Wirkstoffe können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder - schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe und Spurennährstoffe wie Salze von Eisen, Mangan, Bor, Kupfer, Kobalt, Molybdän und Zink verwendet werden.
Die Formulierungen enthalten im allgemeinen zwischen 0,1 und 95 Gewichtsprozent Wirkstoff, vorzugsweise zwischen 0,5 und 90 %.

Die erfindungsgemäß verwendbaren Wirkstoffe können in den Formulierungen in Mischung mit anderen bekannten Wirkstoffen vorliegen wie Fungizide, Insektizide, Akarizide und Herbizide sowie Mischungen mit Düngemitteln und anderen Wachstumsregulatoren.

Die Wirkstoffe können als solche, in Form ihrer Formulierungen oder den daraus bereiteten Anwendungsformen wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen können die Wirkstoffkonzentrationen in den Anwendungsformen

in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 % am Wirkungsort erforderlich.

Die Herstellung und die erfindungsgemäße Verwendung der Wirkstoffe geht aus den folgenden Beispielen hervor.

Beispiel 1

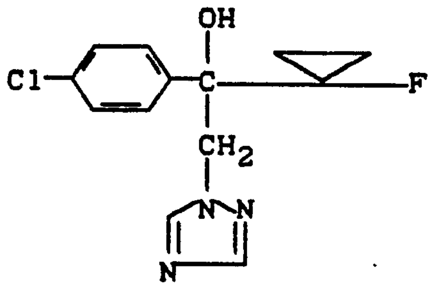

(I-1)

1. Stufe

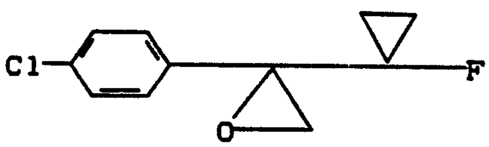

(V-1)

Zu einer Mischung aus 4,8 g Natriumhydrid (80 %ig) und 33,7 g Trimethyloxosulfoniumjodid tropft man bei 10° C 120 ml trockenes Dimethylsulfoxid zu und läßt eine Stunde bei Raumtemperatur nachrühren. Anschließend versetzt man tropfenweise mit 29,7 g (0,15 Mol) 1-(4-Chlorbenzoyl)-1-fluor-cyclopropan in 30 ml Dimethylsulfoxid. Das Reaktionsgemisch wird zwei Tage bei Raumtemperatur gerührt. Danach gießt man auf 400 g Eis, extrahiert mehrmals mit Essigester, wäscht die vereinigten organischen Phasen mit Wasser, trocknet über Natriumsulfat und engt ein. Man erhält 24,8 g (78 % der Theorie) 1-(4-Chlorphenyl)-1-(1-fluorcyclopropyl)-oxiran in Form eines Öles.
Siedepunkt: 83° C/0,2 mbar.

2. Stufe

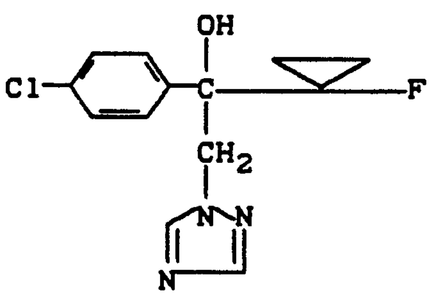

(I-1)

Zu einer siedenden Mischung aus 140 g (2 Mol) 1,2,4-Triazol und 78 g Kaliumcarbonat in 560 ml Acetonitril tropft man eine Lösung von 117,6 g (0,55 Mol) 1-(4-Chlorphenyl)-1-(1-fluor-cyclopropyl)-oxiran in

120 ml Acetonitril und erhitzt das Reaktionsgemisch 8 Stunden unter Rückfluß. Man engt unter vermindertem Druck ein, nimmt den Rückstand in einem Gemisch aus Essigsäureethylester und Wasser auf, wäscht die organische Phase mit Wasser, trocknet über Natriumsulfat und engt durch Abziehen des Lösungsmittels unter vermindertem Druck ein. Das verbleibende Produkt wird einer säulenchromatischen Reinigung an Kieselgel (Laufmittel: Chloroform/Ethanol = 97:3) unterworfen. Man erhält 92,1 g (60 % der Theorie) 1-(4-Chlorphenyl)-1-(1-fluor-cyclopropyl)-2-(1,2,4-triazol-1-yl)-1-ethanol vom Schmelzpunkt 128° C.

Herstellung des Ausgangsproduktes

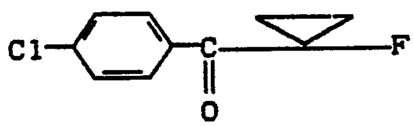

(II-1)

Man löst 20 g (0,085 Mol) 4-Chlorphenyl-(1-fluor-3-chlor-propyl)-keton in 150 ml tert.-Butanol und versetzt portionsweise mit 15 g Kalium-tert.-butylat. Man läßt 2 Stunden bei 40° C nachrühren und engt im Vakuum ein. Der Rückstand wird in Methylenchlorid und Wasser aufgenommen. Man trennt die organische Phase ab, trocknet über Natriumsulfat und engt im Vakuum ein. Der Rückstand wird im Hochvakuum destilliert. Man erhält 14,4 g (85 % der Theorie) 1-(4-Chlorbenzoyl)-1-fluor-cyclopropan vom Siedepunkt Kp = 75° C/0,1 mbar.

Beispiel 2

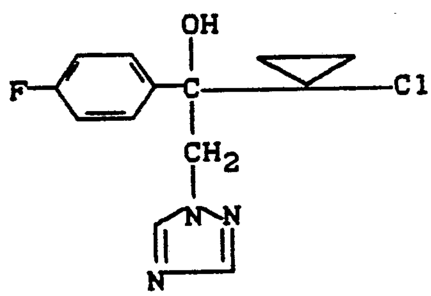

(I-2)

1. Stufe

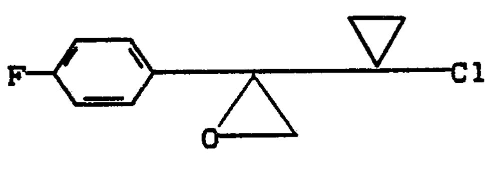

(V-2)

In eine Lösung von 665 ml Dimethylsulfid in 1300 ml tert.-Butanol werden bei Raumtemperatur unter Rühren 1010 g Dimethylsulfat getropft. Man läßt die Mischung 14 Stunden bei Raumtemperatur stehen und gibt dann eine Lösung von 709,5 g (3,6 Mol) 1-(4-Fluorbenzoyl)-1-fluorcyclopropan in 2800 ml tert.-Butanol hinzu. Danach werden bei einer Temperatur zwischen 20 und 30° C unter Rühren 931 g (16,3 Mol) Kaliumhydroxid-Pulver eingetragen. Man rührt 3 Stunden bei 30° C nach und zieht dann das überschüssige Dimethylsulfid unter vermindertem Druck ab. Anschließend gießt man das Reaktionsgemisch auf 2,5 l 1 %ige wäßrige Wasserstoffperoxid-Lösung, extrahiert mehrmals mit Essigester, wäscht die vereinigten organsichen Phasen mit Wasser, trocknet über Natriumsulfat und engt ein. Man erhält 646 g (91 % der Theorie) an 1-(1-Chlor-cyclopropyl)-1-(4-fluorphenyl)-oxiran in Form eines Öles.

$^1H$-NMR-Spektrum (60 MHz; $CDCl_3$):
$\delta$ = 0,9-1,4 (m, 4H)
$\delta$ = 3,0 (d, 1H)
$\delta$ = 3,15 (d, 1H)
$\delta$ = 6,9-7,7 (m, 4H)

2. Stufe

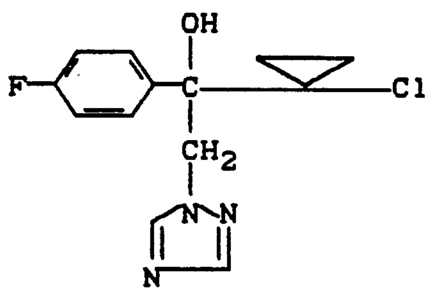

(I-2)

Eine Lösung von 27,1 g (0,13 Mol) 1-(1-Chlorcyclopropyl)-1-(4-fluorphenyl)-oxiran in 30 ml absolutem Dimethylformamid wird unter Stickstoffatmosphäre und unter Rühren bei 50° C in ein Gemisch aus 27,1 g (0,39 Mol) 1,2,4-Triazol, 2,9 Kalium-tert.-butylat und 70 ml absolutem Dimethylformamid eingetropft. Das Reaktionsgemisch wird unter Rühren 6 Stunden auf 80° C erhitzt. Danach engt man durch Abziehen des Lösungsmittels unter vermindertem Druck ein, nimmt den Rückstand in einem Gemisch aus Essigsäureethylester und Toluol auf, wäscht mit Wasser, trocknet über Natriumsulfat und zieht das Lösungsmittel unter vermindertem Druck ab. Der verbleibende Rückstand wird einer säulenchromatographischen Reinigung an Kieselgel (Laufmittel: Chloroform : Ethanol = 98:2) unterworfen. Man erhält 16,4 g (46 % der Theorie) an 1-(4-Fluorphenyl)-1-(1-chlor-cyclopropyl)-2-(1,2,4-triazol-1-yl)-1-ethanol vom Schmelzpunkt 121° C.

Herstellung des Ausgangsproduktes

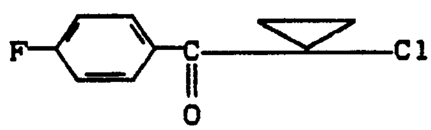

(II-2)

Man löst 233 g (0,99 Mol) 4-Fluorphenyl-(1,3-dichlorpropyl)-keton in 300 ml tert.-Butanol und versetzt portionsweise mit 135 g Kalium-tert.-butylat. Man läßt 2 Stunden bei 40° C nachrühren und engt im Vakuum ein. Der Rückstand wird in Methylenchlorid und Wasser aufgenommen. Man trennt die organische Phase ab, trocknet über Natriumsulfat und engt im Vakuum ein. Der Rückstand wird im Hochvakuum destilliert. Man erhält 145 g (74 % der Theorie) 1-(4-Fluorbenzoyl)-1-chlor-cyclopropan vom Siedepunkt 73° C/0,1 mbar.

Beispiel A

Pseudocercosporella-Test (Getreide) / Sproßbehandlung Feldversuch Getreideart: Winterweizen
Parzellengröße: 1 $m^2$
Anzahl der Wiederholungen: 3
Befall durch: Pseudocercosporella herpotrichoides.

Die Anwendung der Wirkstoffe erfolgt in handelsüblichen Formulierungen beim Schossen des Getreides.

Die Auswertung wird zu dem Zeitpunkt, bei dem die Krankheitssymptome vollständig und gut zu erkennen sind, durchgeführt.

Wirkstoffe, Wirkstoffkonzentrationen und Versuchsergebnisse gehen aus der folgenden Tabelle hervor.

**Tabelle A**

Pseudocercosporella-Test (Getreide) / Sproßbehandlung / Feldversuch

| Wirkstoff | Wirkstoffaufwandmenge in g/ha | Krankheitsbefall in % der unbehandelten Kontrolle |
|---|---|---|
| **bekannt:** | | |
| 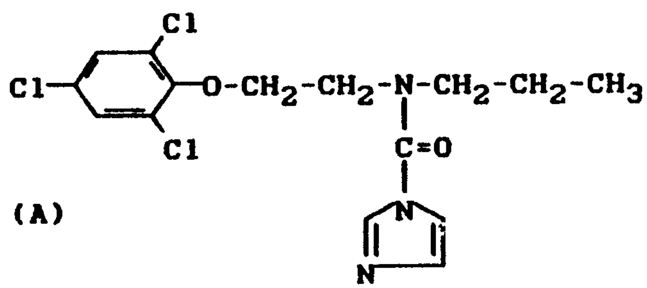 (A) | 250 | 84,1 |
| **erfindungsgemäß:** | | |
| 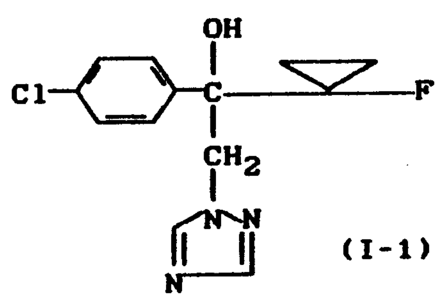 (I-1) | 250 | 43,6 |

**T a b e l l e A** (Fortsetzung)

Pseudocercosporella-Test (Getreide) / Sproßbehandlung / Feldversuch

| Wirkstoff | Wirkstoffaufwandmenge in g/ha | Krankheitsbefall in % der unbehandelten Kontrolle |
|---|---|---|
| 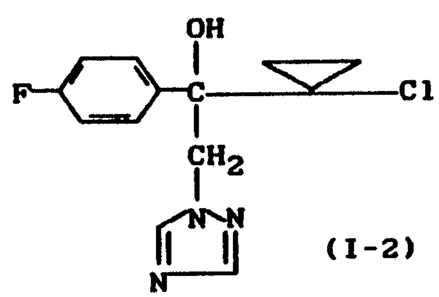 (I-2) | 250 | 34,1 |

## Ansprüche

1. Verwendung von Azolylmethyl-cyclopropyl-carbinol-Derivaten der Formel

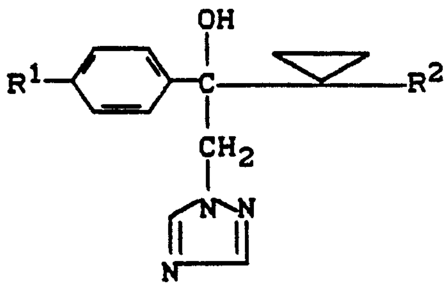

(I)

in welcher
$R^1$ für Fluor oder Chlor steht und
$R^2$ für Fluor oder Chlor steht,
zur Bekämpfung von Pseudocercosporella herpotrichoides.

2. Verfahren zur Bekämpfung von Pseudocercosporella herpotrichoides, dadurch gekennzeichnet, daß man Azolylmethyl-cyclopropyl-carbinol-Derivate der Formel (I) gemäß Anspruch 1 auf Pilze dieser Art und/oder deren Lebensraum ausbringt.

Europäisches Patentamt

# EUROPÄISCHER RECHERCHENBERICHT

Nummer der Anmeldung

EP 88 10 1376

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | EP-A-0 180 136 (BAYER) * Patentanspruch 4; Seite 36, Zeile 23 - Seite 37, Zeile 15; Tabelle 1, Verb. Nr. 8, 33, 84, 107 * ----- | 1,2 | A 01 N 43/653 |

RECHERCHIERTE SACHGEBIETE (Int. Cl.4)

A 01 N

Der vorliegende Recherchenbericht wurde für alle Patentansprüche erstellt

| Recherchenort | Abschlußdatum der Recherche | Prüfer |
|---|---|---|
| DEN HAAG | 01-06-1988 | DECORTE D. |

KATEGORIE DER GENANNTEN DOKUMENTE

X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument